# EUROPEAN PATENT APPLICATION

(11) **EP 1 414 230 A2**
(43) Date of publication of application: **28.04.2004**
(21) Application number: 03022108.9
(22) Date of filing: 29.09.2003
(51) Int. Cl.: H04N 1/00

(54) **Image recording medium and printing order reception apparatus**

(30) Priority: 30.09.2002 JP 2002287358
(71) Applicant: FUJI PHOTO FILM CO., LTD., Kanagawa 250-01 (JP)
(72) Inventor: Iida, Takayuki, Fuji Photo Film Co., Ltd., Ashigarakami-gun Kanagawa-ken (JP)
(74) Representative: Klunker . Schmitt-Nilson . Hirsch

(57) **Abstract**

Information can be managed as to whether or not photographed images have been previously subjected to printing or not. In a recording medium storing image files, reception information is also recorded for managing a state of printing order reception for each of the files. A printing order reception apparatus for receiving printing orders rewrites the reception information to represent a state of reception completion, regarding the image files for which a printing order has been received.

## Description

### BACKGROUND OF THE INVENTION

### Field of the Invention

The present invention relates to a recording medium for storing image data and to a printing order reception apparatus for reading the image data from the recording medium.

### Description of the Related Art

Following the recent spread of digital still cameras (hereinafter referred to as digital cameras), images photographed with digital cameras are recorded as electronic data in recording media. The number of images storable in such a recording medium is much larger than the number of images recorded on a film, and timing of printing the images is not determined. Meanwhile, a user can make selection between printing and not printing the image data he/she photographed.

Such image data can generally be used for printing at home or for an IT tool or the like. As a standard therefor, DPOF (Digital Print Order Form) has been proposed. Image data that support DPOF are easy to use for computerized printing processing. When printing is ordered regarding the image data that support DPOF, specification of the image data to be printed and the number of prints thereof can be recorded in the recording medium.

Meanwhile, a printing apparatus has been proposed to provide a service of printing image data recorded in a recording medium by a digital camera (see Japanese Unexamined Patent Publication No. 2002-262222). In this service, when image data in image files stored in a predetermined file format are printed, printing can be carried out while the image data are arranged in order of photography date, based on photography date/time information included in information added to the image data.

When a customer specifies image data to be printed from a recording medium in order to use the image data recorded in the above-described recording medium and provides the recording medium to a laboratory, the laboratory prints only the image data that have been specified and returns the recording medium to the customer. However, the recording medium does not have a record representing whether or not the image data have been used for placing a printing order.

In the case where printing is ordered in a state where the recording medium still has a free space, if image data are further recorded in the recording medium after the printing, which portion of the image data has already been printed cannot be understood.

### SUMMARY OF THE INVENTION

The present invention has been conceived based on consideration of the above circumstances. An object of the present invention is therefore to provide a system for enabling easy management of whether or not an image has been used for printing.

An image recording medium of the present invention is an image recording medium for storing image data in image files therein, and the image recording medium is characterized by that
reception information is attachable to each of the image files, for managing a state of printing order reception regarding the respective image files, and
the reception information attached to the image file or files for which a printing order has been received is rewritten to indicate completion of printing order reception, by a printing order reception apparatus for receiving the printing order of the image data in the image file or files.

The "image recording medium" refers to a recording medium that enables recording therein of image data obtained by a digital camera or the like. More specifically, the image recording medium refers to a recording medium using a memory, such as a SmartMedia^{TM}, a Memory Stick^{TM}, or a memory card, or an optical recording medium such as a DVD or a CD-RW. The image recording medium can be used for placing a printing order from a laboratory, and for printing at home by using a printing device such as a printer or a personal computer, for example.

The "image data" represent still images or moving images obtained by a digital camera, for example. The image files have various formats such as Exif, JPEG, CAM, CIFF, Motion JPEG, and MPEG, and refer to files that store the image data.

"Receiving the printing order" refers to reception of a printing order by a laboratory or to printing by using a printing device or a personal computer. In the case of moving image data, the printing order may be received in a unit of a scene.

By enabling the reception information to be attached to the respective image files, the state of printing order reception regarding the image data can be managed as the information attached to the image files. Printing order information may be attached to the image files for placing a printing order.

The printing order information is recorded in the image recording medium to represent whether or not a printing order has been placed for each of the image files. For example, the printing order information is recorded in the image recording medium by using a flag or the like.

Customer information representing a customer who obtained the image data, or who owns the image recording medium, is preferably recorded in the image recording medium for later processing. Therefore, the image recording medium may enable recording of the customer information regarding the customer who records the image data.

A printing order reception apparatus of the present invention comprises:
image data reading means for reading image files, attached with reception information for managing a state of printing order reception, from an image recording medium that stores image data in the image files; and
reception means for receiving a printing order for the image data of the image files that have been read, and for rewriting the reception information of the image files to indicate completion of printing order reception thereof.

The printing order reception apparatus has a function of reading from/writing in the image recording medium. More specifically, the printing order reception apparatus refers to an order reception apparatus installed in a laboratory or the like for placing a printing order regarding the image data, or to an apparatus that can print the image data, such as a printing device (like a printer) or a personal computer.

It is preferable for the printing order reception apparatus to enable confirmation of whether a printing order has already been received or not, for each image file. Therefore, the printing order reception apparatus preferably comprises reception state confirmation means for displaying on a display device whether the respective image files have been subjected to printing order reception or not, for enabling confirmation thereof based on the reception information of the respective image files.

The respective image files may be attached with printing order information for placing a printing order.

Customer information regarding a customer who obtained the image data, or who owns the image recording medium, is preferably received for later processing. Therefore, the image recording medium may have customer information regarding the customer who records the image data. In this case, it is preferable for the printing order reception apparatus to further comprise customer information reading means for reading the customer information from the image recording medium at the time of printing order reception of the image data in the image files.

According to the image recording medium of the present invention, the reception information can be attached to the image files for managing the state of printing order reception. Therefore, whether or not printing order reception has been carried out can be managed for each of the image files. In this manner, even in the case where the image recording medium that still has a free space is provided for placing a printing order, information can be recorded as to which of the image files have already been printed or not or how many times printing has been carried out thereon.

Furthermore, if the printing order information is also attached to the respective image files for placing a printing order, the image files to be printed can be specified regardless of whether the respective image files have been printed or not.

By recording the customer information regarding the customer who records the image data, or who owns the image recording medium, in the image recording medium, customer management can also be carried out.

According to the printing order reception apparatus of the present invention, the image data in the image files are read from the image recording medium, and the reception information representing whether or not printing order reception has been carried out for each of the image files can be rewritten to represent completion of printing order reception. Therefore, which of the image files have been printed or how many times printing has been carried out thereon can be recorded in the image recording medium. In this manner, the image recording medium that still has a free space can be provided for printing.

If confirmation can be made based on the reception information of the image files as to whether the respective image files have been subjected to printing order reception or not, a printing order can be placed with accuracy.

By reading the customer information regarding the customer who recorded the image data in the image recording medium, or who owns the image recording medium, the customer can be provided with various kinds of services, which contribute to a sales increase.

### BRIEF DESCRIPTION OF THE DRAWINGS

Figures 1A and 1B show the content of a recording medium;
Figure 2 is a block diagram showing the configuration of a printing order reception apparatus;
Figure 3 is a flow chart showing reception processing at a laboratory;
Figure 4 is a flow chart showing correction processing;
Figure 5 is a flow chart showing order placement processing;
Figure 6 is a flow chart showing other reception processing at the laboratory;
Figure 7 is a flow chart showing confirmation processing;
Figure 8 is a flow chart showing processing of recording in a CD-RW at the laboratory;
Figure 9 is a flow chart showing editing processing; and
Figure 10 is a flow chart showing processing for placing an order with use of the CD-RW.

### DESCRIPTION OF THE PREFERRED EMBODIMENT

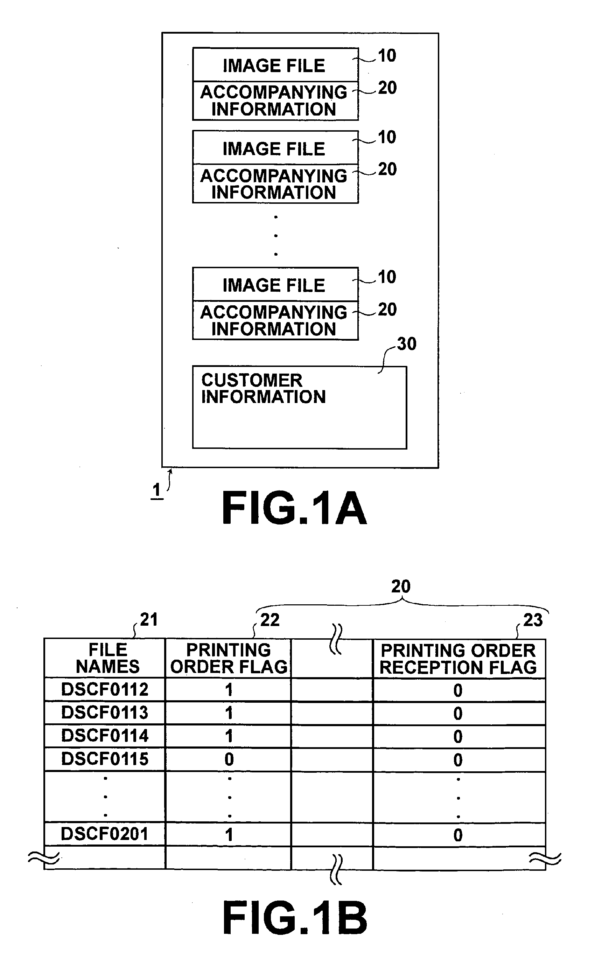

Hereinafter, an embodiment of an image recording medium and a printing order reception apparatus of the present invention will be explained with reference to the accompanying drawings. Figures 1A and 1B show the content of an image recording medium 1 (hereinafter simply referred to as the recording medium 1) of the present invention for recording image data therein.

In the recording medium 1 are recorded image files 10 that store image data representing still images and moving images obtained by a digital camera or the like, and accompanying information 20 for managing a state of printing order reception and a state of printing order regarding the respective image files 10, as shown in Figure 1A.

The recording medium 1 has also recorded therein customer information 30 regarding a customer who obtained the image data, or who owns the image recording medium. The customer information 30 comprises items which leads to lifetime sales, such as the address, the names of family members, date of birth, and the E-mail address of the customer, a method of payment, a camera used for photography, a history of services used (such as postcard generation and album printing), points earned by using the services, and a laboratory used for the services. The laboratory may prepare the recording medium 1 having the customer information 30 recorded therein, then provide the recording medium to the customer.

The accompanying information 20 comprises a printing order flag 22, which represents whether or not the corresponding image file 10 in the recording medium 1 is to be printed, and a printing order reception flag 23, which represents whether or not the corresponding image file 10 has been subjected to printing order reception by the laboratory for printing the image represented by the corresponding image file 10 or whether or not the image has been read for printing with a printer or a personal computer. A relationship is shown in Figure 1B, between names 21 of the image files 10 and the flags 22 and 23.

The printing order flag 22 enables the customer to specify the image file or files 10 to be printed (hereinafter referred to as printing target image files 10) by using the digital camera or the like. For example, as shown in Figure 1B, the printing order flag 22 has a value "1" for the printing target image files 10 and has a value "0" for the image files 10 whose printing is not carried out.

The printing order reception flag 23 is rewritten to represent a state of printing order reception completion when the corresponding image file 10 is read for printing by the printing order reception apparatus such as an apparatus for receiving a printing order in the laboratory or a printer with a personal computer. It is preferable for the printing order reception flag 23 to be managed so as not let the customer rewrite the flag. Therefore, only the printing order reception apparatus rewrites the printing order reception flag 23. More specifically, when the recording medium 1 is received from the customer by the laboratory, the printing order reception apparatus reads the image file or files 10 whose printing order flag 22 has the value 1, and respectively rewrites the printing order reception flag 23 and the printing order flag 22 thereof to 1 and 0, before the recording medium 1 is returned to the customer.

When the recording medium 1 is received from the customer, the image file or files 10 whose printing order flag 22 and printing order reception flag 23 respectively have the value 1 are judged to be image file or files 10 for which reprints are desired. At this time, when the printing order reception apparatus reads the image file or files 10, the printing order reception apparatus may change the values of the printing order reception flag 23 and the printing order flag 22 to 2 and to 0, respectively. In this manner, the image file or files 10 can also be managed to indicate reprinting thereof.

As has been described above, the printing order reception flag 23 and the printing order flag 22 enable recording of the printing history, such as whether the corresponding image file 10 is to be printed or not, whether the corresponding image file 10 has once been subjected to printing or not, whether the corresponding image file is used for reprinting or not, and how many prints have been made from the corresponding image file, for example.

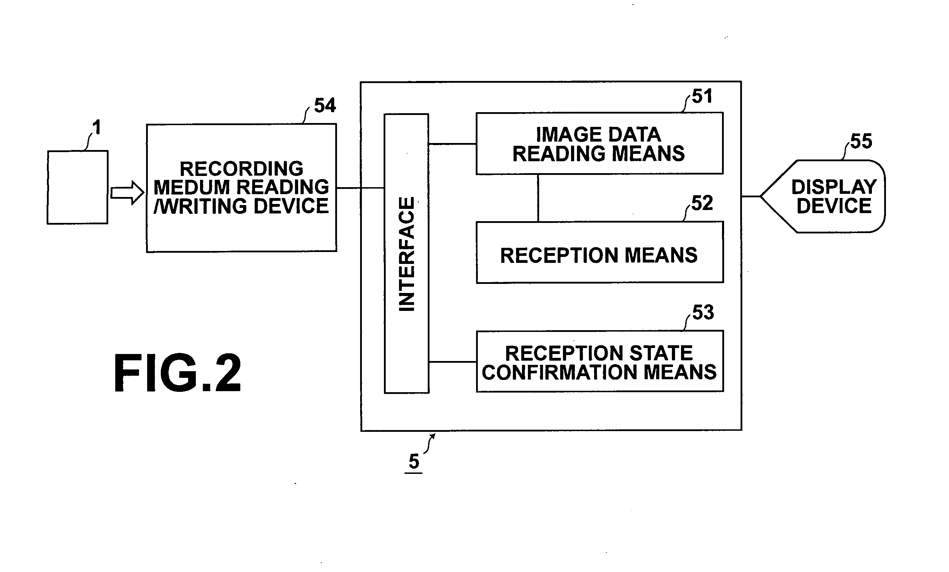

The printing order reception apparatus of the present invention for receiving the printing order regarding the image data will be explained next in detail. Figure 2 is a block diagram showing the configuration of a printing order reception apparatus 5 according to an embodiment of the present invention.

As has been described above, the printing order reception apparatus 5 is the apparatus that enables printing of the image data, such as an order reception apparatus for receiving the printing order at the laboratory, a printer, or a personal computer. The printing order reception apparatus 1 comprises image data reading means 51 for reading the image files 10 from the recording medium 1 that stores the image data, and reception means 52 for rewriting the printing order reception flag 23 thereof to represent the state of printing order reception completion.

The printing order reception apparatus 5 further comprises reception state confirmation means 53 for confirming whether or not printing order reception has been completed for the printing target image files 10, based on the printing order reception flag 23 thereof.

By using a recording medium reading/writing device 54, the image data reading means 51 reads the printing target image files 10 from the recording medium 1 such as a recording medium of a SmartMedia^{TM} format, a Memory Stick^{TM} format, or a memory card, or an optical recording medium such as a DVD or a CD-RW. The image data reading means 51 reads the image files 10 with reference to the printing order flag 22 in the case where the printing target image files 10 are managed by the printing order flag 22, as shown in Figure 1A.

The reception means 52 changes the printing order reception flag 23 of the printing target image files 10 to indicate the state of printing order reception completion by using the recording medium reading/writing device 54.

The reception state confirmation means 53 reads the printing order reception flag 23 of the respective image files 10 in the recording medium 1, and displays on a display device 55 which of the image files 10 have been subjected to printing order reception.

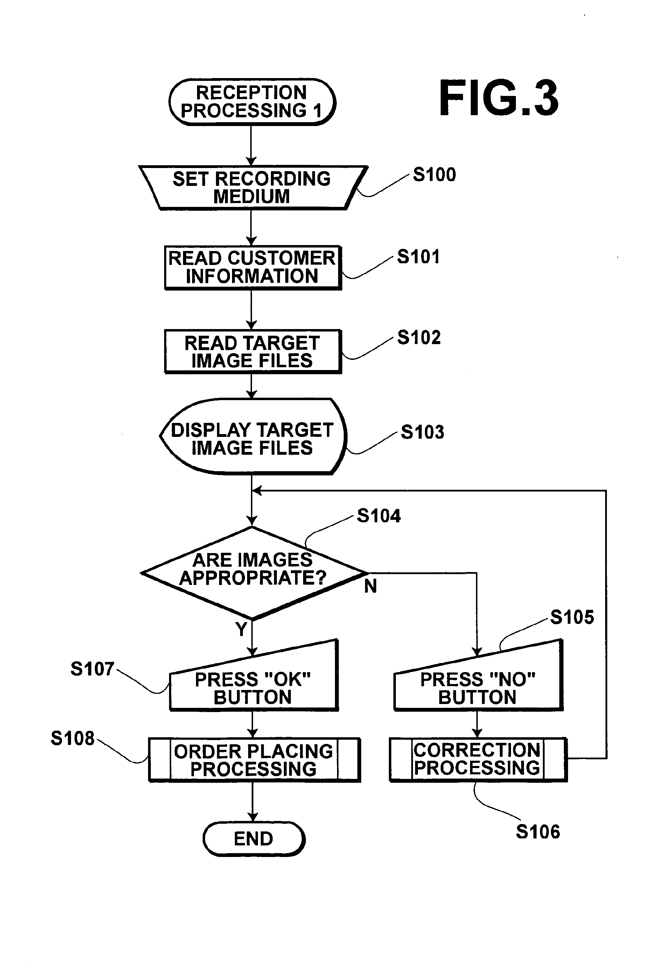

The case where the customer places the printing order from the printing order reception apparatus 5 at the laboratory will be explained with reference to flow charts shown in Figures 3 to 5, regarding the image data stored in the recording medium 1. The printing order reception apparatus 5 is the order reception apparatus installed in the laboratory for receiving the printing order.

Procedures for accepting at the laboratory the printing target image files 10 among the image files in the recording medium 1 (hereinafter referred to as reception processing) will be explained first with reference to the flow chart shown in Figure 3. A clerk in the laboratory or the customer sets the recording medium 1 of the customer on the order reception apparatus 5 (Step S100). The customer information 30 recorded in the recording medium 1 is read out by a customer information reading means (Step S101), and the printing target image files 10 are read out of the image files 10 recorded in the recording medium 1, with reference to the printing order flag 22 thereof (Step S102).

The printing target image files 10 are then displayed as thumbnail images on the display device 55 of the order reception apparatus 5 (Step S103), and confirmation is made regarding whether the images represented by the respective printing target image files 10 are appropriate or not (Step S104). In some cases, when the image data to be printed are displayed on the display device 55, the images may be blurry or inappropriate regardless of the fact that the images were not recognized to be blurry or inappropriate on an LCD (reflective color liquid crystal display) of the digital camera. Therefore, it is preferable for the order reception apparatus 5 to have a function of adjusting an image quality such as color, sharpness, and Hyper-Tone of the displayed image data according to a preference of the customer, read out by a customer data readout means.

In the case where any one or some of the images represented by the image files 10 are not appropriate on the display device 55 (Step S105), correction processing is carried out on the specification of image data to be printed (Step S106), and confirmation is then made again by displaying the image data on the display device 55 . If the image or images are appropriate (Step S107) , order placing processing is carried out (Step S108). If the image or images are still inappropriate (Step S105), the correction processing is carried out again (Step S106).

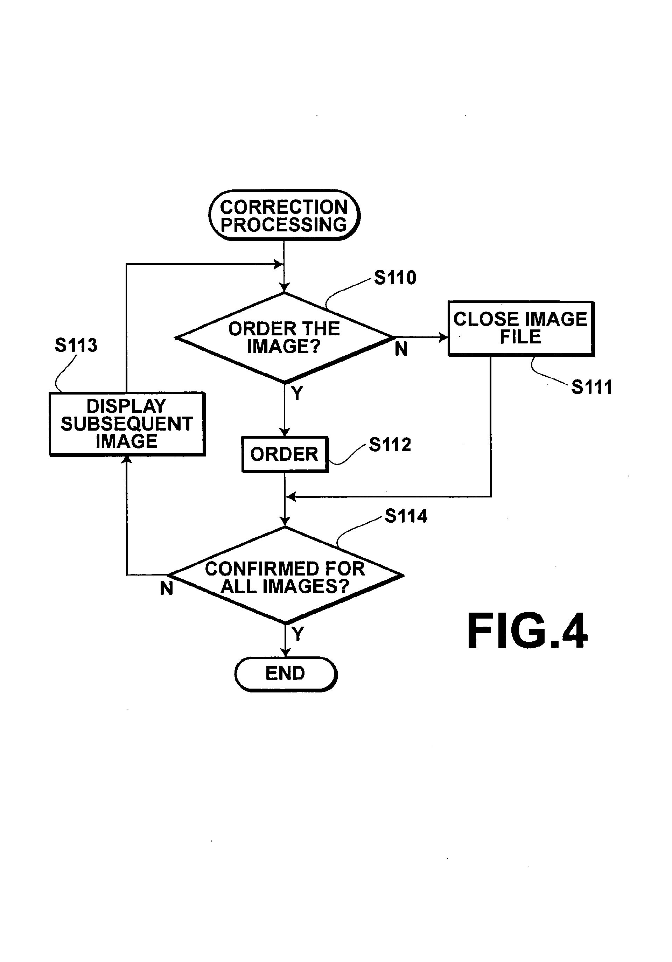

The correction processing will be explained next with reference to the flow chart shown in Figure 4 . In the correction processing, the printing target image files 10 are displayed one by one and whether the printing target image file 10 being displayed is to be printed or not is confirmed each time (Step S110). The printing target image file 10 that is not necessary is deleted from the order reception apparatus 5 (Step S111). By keeping only the image files 10 for which a printing order is to be placed, the printing target image file 10 is determined (Step S112). The subsequent printing target image file 10 is then displayed (Step S113), and the correction processing ends in the case where confirmation has been made for all the printing target image files 10 (Step S114).

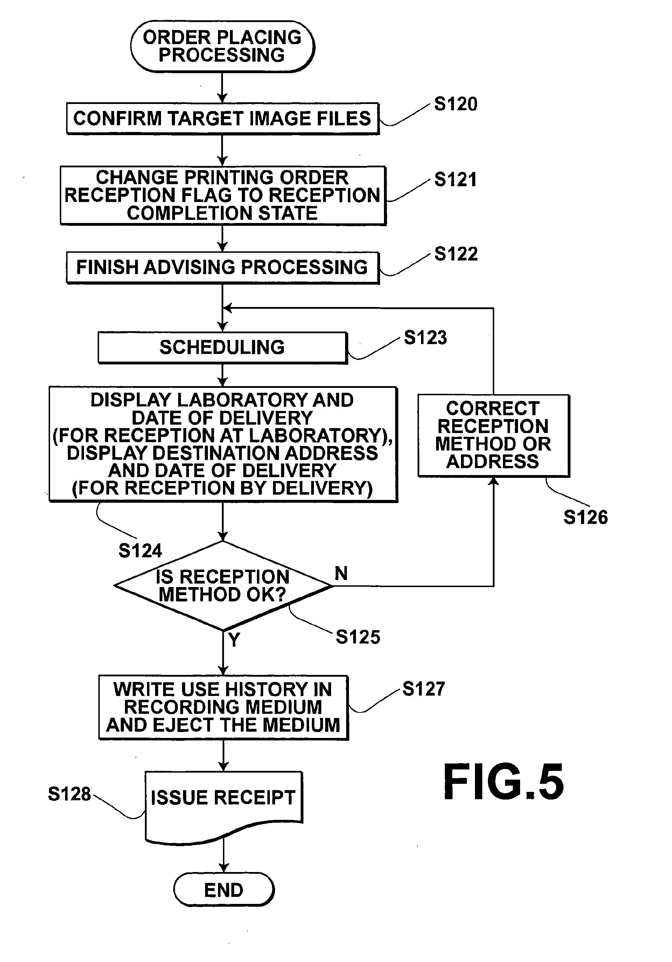

The order placing processing will be explained with reference to the flow chart shown in Figure 5. In the order placing processing, the printing target image files 10 are confirmed (Step S120), and the printing order reception flag 23 of the printing target image files 10 is changed to represent the state of printing order reception completion (Step S121). Furthermore, finish advising processing is carried out on the image data of the printing target image files 10 (Step S122). A printing schedule is then generated regarding the printing target image files 10 (Step S123). The laboratory according to the customer information 30 and the date of delivery are displayed in the case of reception of prints at the laboratory, while the address of destination and the delivery date are displayed in the case of reception of the prints by delivery (Step S124). The customer confirms information on the reception displayed on the display device 55 (Step S125), and corrects the reception method (either at the laboratory or by delivery) or the address upon necessity (Step S126).

If the reception information is appropriate, use history is recorded by the order reception apparatus 5 in the recording medium 1, and the recording medium 1 is ejected from the order reception apparatus 5 (Step S127). A receipt is issued to end the processing (Step S128).

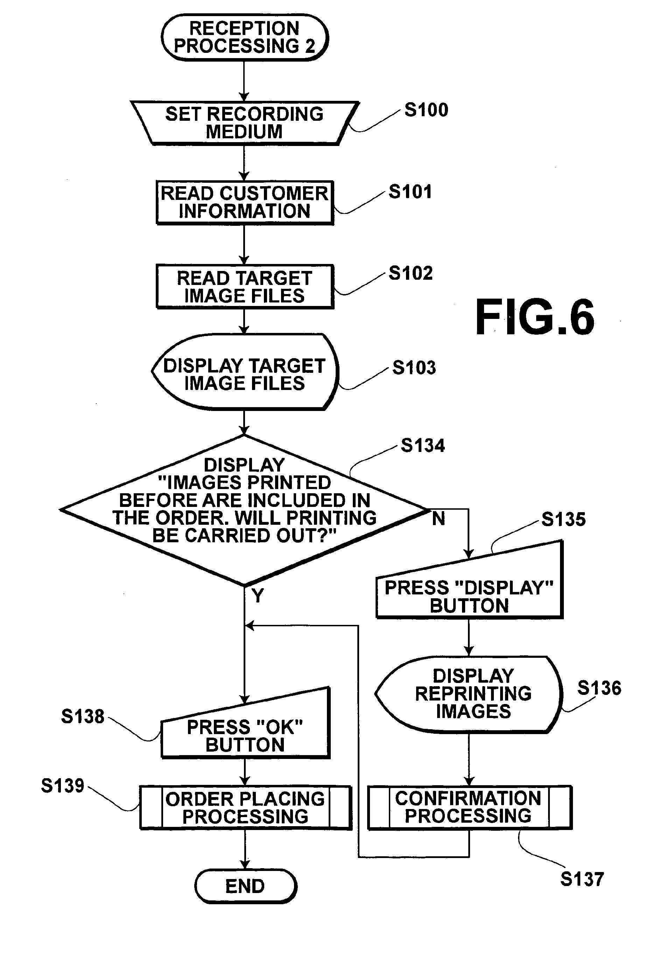

The case where the customer places a printing order from the order reception apparatus 5 will be explained next with reference to a flow chart shown in Figure 6, regarding the recording medium 1 storing the image file or files 10 whose printing has once been carried out (hereinafter referred to as reprinting target image files) in the laboratory.

The procedures from Step S100 to Step S102 are the same as in the flow chart shown in Figure 4. In the procedures, the printing target image files 10 are read from the recording medium 1.

The printing target image files 10 are displayed on the display device 55 of the order reception apparatus 5 (Step S103). With reference to the printing order reception flag 23 of each of the target image files 10, all the reprinting target image files 10 are displayed. A message such as "Images printed before are included in the current order. Will printing be carried out on the images?" is displayed for confirmation (Step S134).

In the case where any one or some of the reprinting target image files 10 displayed on the display device 55 are not to be printed, the customer presses a "Display" button (Step S135), and displays the reprinting target image files 10 (Step S136). Confirmation processing is carried out for the reprinting target image files 10 displayed in this manner (Step S137). If the reprinting target image files confirmed in this manner are to be printed (Step S138), the printing order placing processing is carried out (Step S138).

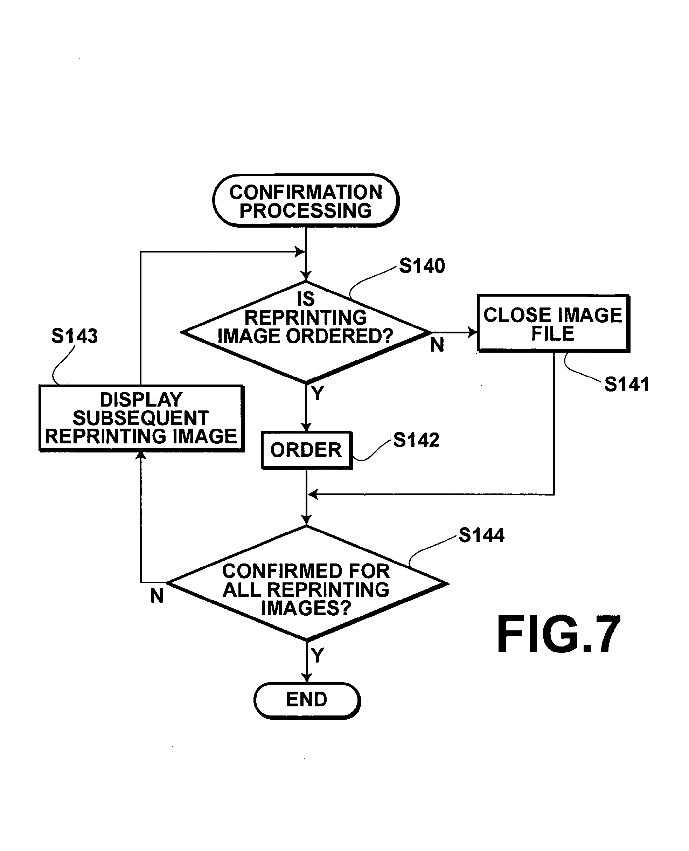

The confirmation processing will be explained next with reference to a flow chart shown in Figure 7. In the confirmation processing, the reprinting target image files 10 are displayed one by one, and each time the customer is asked about whether the reprinting target image file 10 being displayed is printed again or not (Step S140). The reprinting target image file 10 that is not necessary is then deleted from the order reception apparatus 5 (Step S141). By keeping only the image files 10 that are to be reprinted, the reprinting target image file 10 included in the printing order is confirmed (Step S142). The subsequent reprinting target image file 10 is then displayed (Step S143). After the confirmation has been made for all the reprinting target image files 10 (Step S144), the processing ends.

The order placing processing is the same as in the flow chart shown in Figure 5. The printing order reception flag 23 is changed to have a value "2" to indicate reprinting.

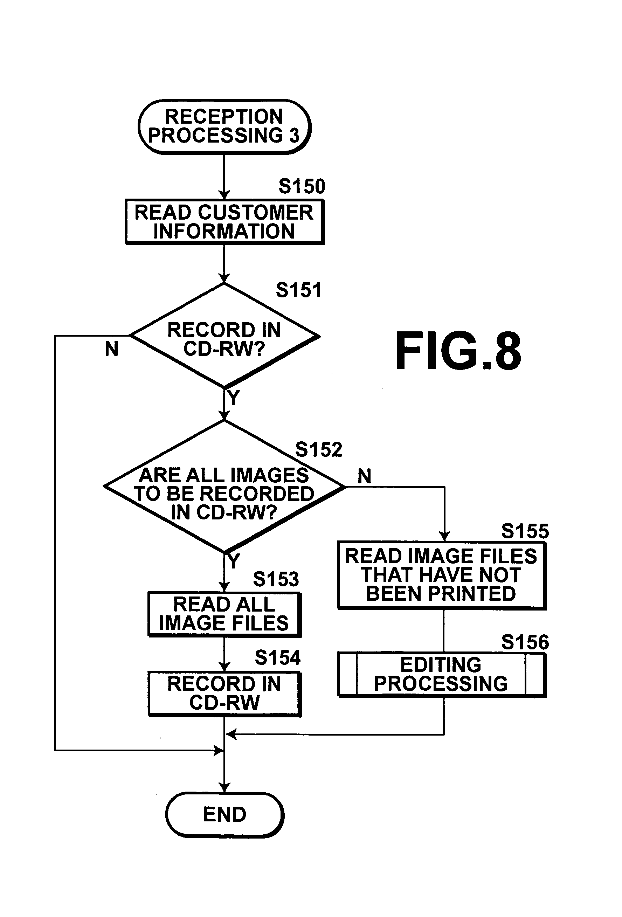

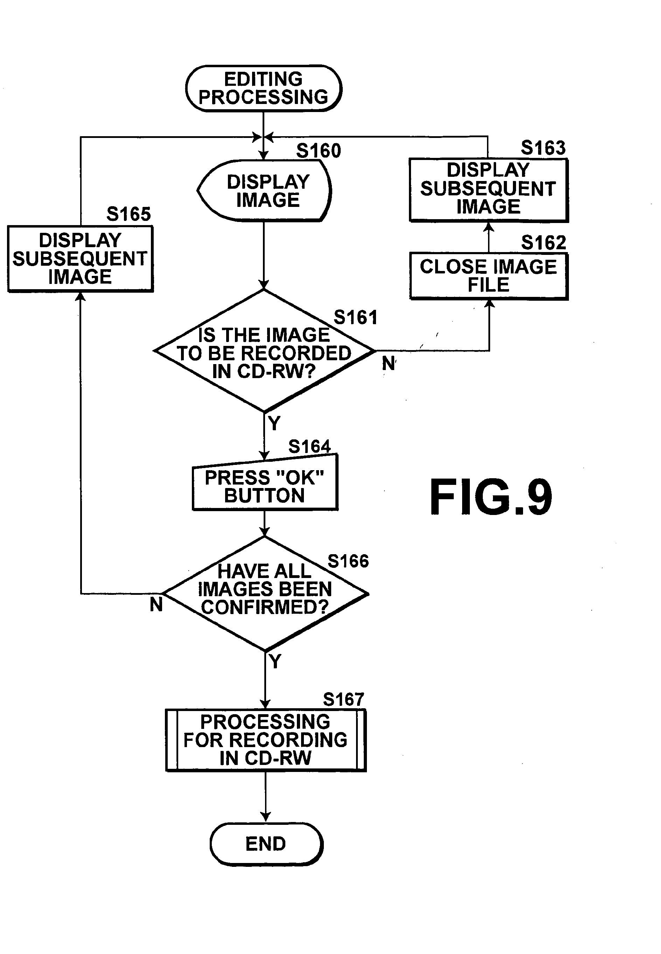

The case of recording the image data will be explained next with reference to flow charts in Figures 8 and 9. The image files 10 in the portable recording medium 1 such as a SmartMedia^{TM} are organized in a large-capacity recording medium such as a CD-RW. The large-capacity recording medium is assumed to be a CD-RW in the explanation below.

The customer information 30 is read from the recording medium 1 (Step S150), as shown in the flow chart in Figure 8. The customer is asked about whether all the image files 10 in the recording medium 1 are to be recorded in the CD-RW or not (Step S151). In the case where all the image files 10 are to be recorded (Step S152), all the image files 10 are read (Step S153) and recorded in the CD-RW (Step S154). Even if not all the image files 10 are recorded in the CD-RW, the image files 10 which have been subjected to printing are recorded in the CD-RW. Therefore, the image files 10 which have not been printed before are read with reference to the printing order reception flag 23 thereof (Step S155), and editing processing is then carried out thereon (Step S156).

The editing processing will be explained next with reference to the flow chart shown in Figure 9. In the editing processing, each of the image files 10 which has not been printed is sequentially displayed (Step S160) , and the customer is asked about whether the image file 10 being displayed is to be recorded in the CD-RW or not (Step S161). The image file 10 that does not need to be recorded in the CD-RW is deleted from the order reception apparatus 5 (Step S162) , and the subsequent image file 10 is displayed (Step S163).

In the case where the image file 10 being displayed is to be recorded in the CD-RW (Step S161) , an OK button is pressed (Step S164). The subsequent image file 10 is then confirmed for recording (Step S165). In the case where confirmation has been made for all the image files 10 (Step S166) , the image files 10 that have been printed and the image files 10 selected in the above manner are recorded in the CD-RW (Step S167), and the editing processing ends.

When the image files 10 are recorded in the CD-RW, the image files 10 that have not been subjected to printing are not likely to be printed in the future. Therefore, for the sake of distinction, the image files 10 that have been subjected to printing are stored in a folder different from a folder of the image files 10 that have not been printed, for example.

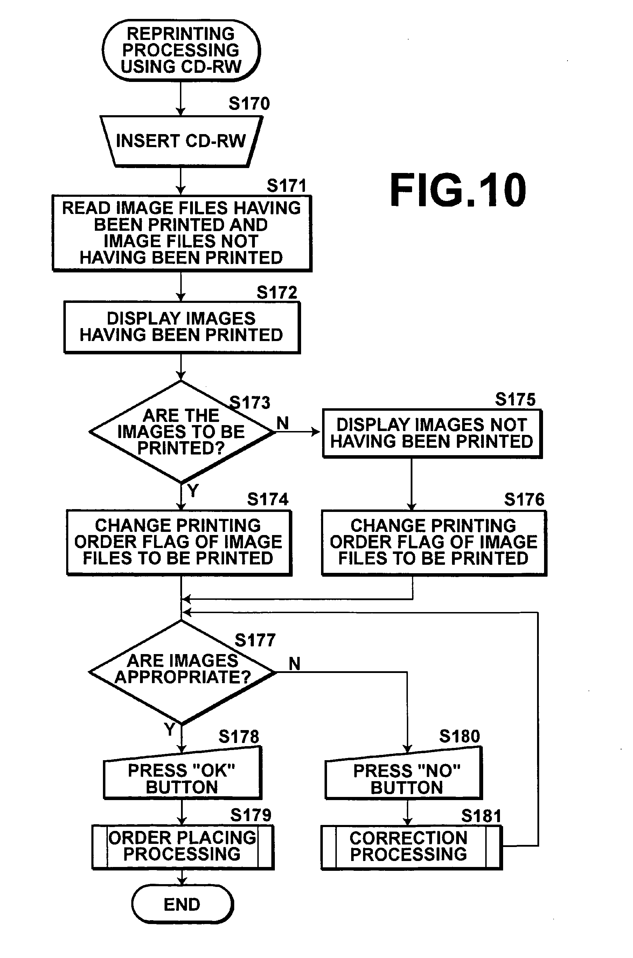

Order placing processing regarding the image files 10 in the CD-RW will be explained next with reference to a flow chart in Figure 10.

The CD-RW of the customer is set in the order reception apparatus 5 in the laboratory (Step S170). With reference to the printing order reception flag 23, the image files 10 that have not been printed are read separately from the image files 10 that have been subjected to printing (Step S171). The image files 10 that have been subjected to printing are displayed first (Step S172), and the customer is asked about whether the image files are to be printed again or not (Step S173). For the image files 10 to be printed, the printing order flag 22 thereof is changed to have the value 1 (Step S174).

In the case where all the image files 10 that have been subjected to printing do not need to be printed again, the image files 10 that have not been subjected to printing are displayed (Step S175). In the case where any one or some of the image files 10 being displayed are to be printed, the printing order flag 22 thereof is changed to have the value 1 (Step S176).

The image files 10 to be printed this time are then confirmed (Step S177). If any one of the image files to be printed this time is not appropriate (Step S180), the correction processing (see Figure 4) is carried out (Step S181). In the case where the image files 10 are appropriate (Step S178), the order placing processing (see Figure 5) is carried out (Step S179).

As has been described above, by managing whether each of the image files has been subjected to printing processing or not, confirmation can be made as to whether or not reprinting is carried out, and the printing history can be managed. Therefore, the recording medium 1 can be provided for printing even if the recording medium still has a free space.

## Claims

1. An image recording medium of for storing image data in image files therein, wherein
reception information is attachable to the respective image files, for managing a state of printing order reception regarding the respective image files, and
the reception information attached to the image file or files for which a printing order has been received is rewritten to indicate completion of printing order reception, by a printing order reception apparatus for receiving the printing order for the image data stored in the image file or files.

2. The image recording medium according to Claim 1, wherein printing order information is attachable to the respective image files for placing a printing order.

3. The image recording medium according to Claim 1 or 2, in which customer information regarding a customer who records the image data can be recorded.

4. A printing order reception apparatus comprising:
image data reading means for reading image files, attached with reception information for managing a state of printing order reception, from an image recording medium that stores image data in the image files; and
reception means for receiving a printing order for the image data of the image files that have been read, and rewriting the reception information of the image files to indicate completion of printing order reception thereof.

5. The printing order reception apparatus according to Claim 4, further comprising reception state confirmation means for displaying on a display device whether the respective image files have been previously subjected to printing order reception or not, for enabling confirmation thereof based on the reception information of the respective image files that have been read.

6. The printing order reception apparatus according to Claim 4 or 5, wherein the image files are respectively attached with printing order information for placing a printing order.

7. The printing order reception apparatus according to any one of Claims 4 to 6, wherein
the image recording medium has customer information regarding a customer who records the image data therein, and
the printing order reception apparatus further comprises customer information reading means for reading the customer information at the time of printing order reception of the image data in the image files that have been read.
